# EUROPEAN PATENT APPLICATION

(11) **EP 2 052 770 A1**
(43) Date of publication of application: **29.04.2009**
(21) Application number: 07791332.5
(22) Date of filing: 26.07.2007
(51) Int. Cl.: B01D 53/94, B01J 29/16

(54) **METHOD FOR DECOMPOSING DINITROGEN MONOXIDE**

(30) Priority: 15.08.2006 JP 2006221414
(71) Applicant: Idemitsu Kosan Co., Ltd., Chiyoda-ku Tokyo 100-8321 (JP)
(72) Inventor: FUJIWARA, Naoki, Chiba 299-0267 (JP)
(74) Representative: HOFFMANN EITLE
(86) International application number: PCT/JP2007/064632
(87) International publication number: WO 2008/020535

(57) **Abstract**

A method for decomposing dinitrogen monoxide including bringing a gas containing dinitrogen monoxide into contact with a fluid catalytic cracking (FCC) equilibrium catalyst.

## Description

### TECHNICAL FIELD

The invention relates to a method for decomposing dinitrogen monoxide contained in a combustion gas or an exhaust gas.

### BACKGROUND ART

Fluidized bed combustion using coal, heavy oil, petroleum coke, industrial wastes or the like as fuel emits a small amount of nitrogen oxides such as nitrogen monoxide (NO) and nitrogen dioxide (NO₂) which are pollutant gases, since combustion is conducted at a low temperature of around 800°C. Fluidized bed combustion also releases a large amount of dinitrogen monoxide (N₂O) which is one of the major pollutants that causes global warming. Therefore, development of technologies for reducing the amount of dinitrogen monoxide is required.

In order to reduce the amount of N₂O, a technique has been developed in which N₂O contained in an exhaust gas emitted from a combustion furnace is decomposed using a catalyst, plasma discharge or the like at a low temperature of 300 to 400°C.
However, to put this technique into practice, simplification of a system, development of a good catalyst and reduction in plant cost or the like has to be realized.
For example, Patent Document 1 discloses an NOx removal technique using alumina. However, what is removed by this technique is nitrogen monoxide or nitrogen dioxide, not dinitrogen monoxide.
The inventor proposed technologies of decomposing dinitrogen monoxide in Patent Documents 2 and 3.
The technology disclosed in Patent Document 2 is a method for decomposing dinitrogen monoxide using ν -alumina. The technology disclosed in Patent Document 3 is aimed at suppressing emission of dinitrogen monoxide and NOx in fluidized bed combustion by using a desulfurizing agent and a fluidized catalyst.
Patent Document 1: JP-A-S63-12328
Patent Document 2: JP-A-H6-123406
Patent Document 3: JP-A-2004-82111

The object of the invention is to provide a method for decomposing dinitrogen monoxide contained in a combustion gas or an exhaust gas discharged from a combustion furnace.

### DISCLOSURE OF THE INVENTION

The invention provides the following method for decomposing dinitrogen monoxide.
1. A method for decomposing dinitrogen monoxide comprising bringing a gas containing dinitrogen monoxide into contact with a fluid catalytic cracking (FCC) equilibrium catalyst.
2. The method for decomposing dinitrogen monoxide according to 1, wherein the FCC equilibrium catalyst is used as a fluidized bed material in a fluidized bed combustion furnace, and a combustion gas containing dinitrogen monoxide is brought into contact with the FCC equilibrium catalyst in the combustion furnace.
3. The method for decomposing dinitrogen monoxide according to 1, wherein the FCC equilibrium catalyst is introduced into a fluidized bed combustion furnace, and a combustion gas containing dinitrogen monoxide is brought into contact with the FCC equilibrium catalyst in the combustion furnace.
4. The method for decomposing dinitrogen monoxide according to 1, wherein a mixture of the FCC equilibrium catalyst and fuel is introduced into a fluidized bed combustion furnace, and a combustion gas containing dinitrogen monoxide is brought into contact with the FCC equilibrium catalyst in the combustion furnace.
5. The method for decomposing dinitrogen monoxide according to 1, wherein the FCC equilibrium catalyst is put in the exhaust gas discharged from a combustion furnace, and the exhaust gas is brought into contact with the FCC equilibrium catalyst.
6. The method for decomposing dinitrogen monoxide according to 1, wherein the exhaust gas discharged from a combustion furnace is allowed to pass through the catalyst bed which has been filled with the FCC equilibrium catalyst, whereby the exhaust gas is brought into contact with the FCC equilibrium catalyst.
7. The method for decomposing dinitrogen monoxide according to any one of 1 to 6, wherein activated alumina is used with the FCC equilibrium catalyst.

The invention can provide a method for decomposing dinitrogen monoxide by using an FCC equilibrium catalyst. For example, by incorporating an FCC equilibrium catalyst in a fluidized bed combustion furnace as a catalyst for decomposing dinitrogen monoxide, dinitrogen monoxide can be decomposed within the furnace.
In addition, dinitrogen monoxide contained in an exhaust gas emitted from a combustion furnace can be decomposed by an FCC equilibrium catalyst. As a result, reduction of substances causing global warming, system simplification, elimination of plant reconstruction or reduction in plant cost can be attained.

### BRIEF DESCRIPTION OF THE DRAWINGS

FIG. 1 is a schematic view showing one example of a fluidized bed combustion furnace;
FIG. 2 is a schematic view of an apparatus used to examine the relationship between the sample temperature and the N₂O removal ratio; and
FIG. 3 is a graph showing the relationship between the sample temperature and the N₂O removal ratio.

### BEST MODE FOR CARRYING OUT THE INVENTION

The method for decomposing dinitrogen monoxide according to the invention is characterized in that dinitrogen monoxide is decomposed by bringing a gas containing dinitrogen monoxide into contact with a fluid catalytic cracking (FCC) equilibrium catalyst.
The FCC equilibrium catalyst is a solid acid catalyst in the form of fine particles which is used in the fluid catalytic cracking process of petroleum. The inventor has found that this catalyst is also effective in decomposing dinitrogen monoxide.
The fluid catalytic cracking (FCC) catalyst is a catalyst for producing high-octane gasoline by subjecting heavy oil (vacuum gas oil, atmospheric residue or the like) to catalytic cracking. Examples thereof include metal oxides such as alumina, silica, silica/alumina, titania, and alumina/titania, clay minerals such as china clay and bentonite, various kinds of zeolite, and porous particles obtained by a known method, for example, in which alumina, silica/alumina, rare earth-supported Y zeolite, china clay or the like is subjected to spray drying.

An FCC equilibrium catalyst means a catalyst which is periodically withdrawn when the catalytic activity of an FCC apparatus becomes constant. It is a catalyst in which a metal such as iron, vanadium and nickel is accumulated on the above-mentioned FCC catalyst by a catalytic cracking reaction of heavy oil (vacuum gas oil, atmospheric residue or the like).
An FCC equilibrium catalyst is preferably a catalyst in which vanadium and/or nickel is accumulated on the particle surface in an amount of 500 to 15,000 mass ppm. A particularly preferable FCC equilibrium catalyst is one in which vanadium and/or nickel is accumulated in an amount of 800 to 5,000 mass ppm.

In the invention, dinitrogen monoxide is decomposed by bringing a gas containing dinitrogen monoxide into contact with an FCC equilibrium catalyst. There are no particular limitations on the method of bringing the gas into contact with an FCC equilibrium catalyst. For example, an FCC equilibrium catalyst bed may be formed in a gas flow path to allow the gas to pass through the bed, or an FCC equilibrium catalyst may be put in an area where gas is present within the combustion furnace, thereby allowing the gas to be in contact with the FCC equilibrium catalyst.
An explanation will be made below on the case where the method of decomposing dinitrogen monoxide of the invention is applied to a fluidized bed combustion furnace.
Examples of the fluidized bed furnace to which the invention is applied include bubbling fluidized bed furnaces, circulating fluidized bed furnaces, internally circulating fluidized bed furnaces, revolving fluidized bed furnaces, atmospheric fluidized bed furnaces and pressurized fluidized bed furnaces. The fluidized bed may be one provided in part of a combustion furnace.

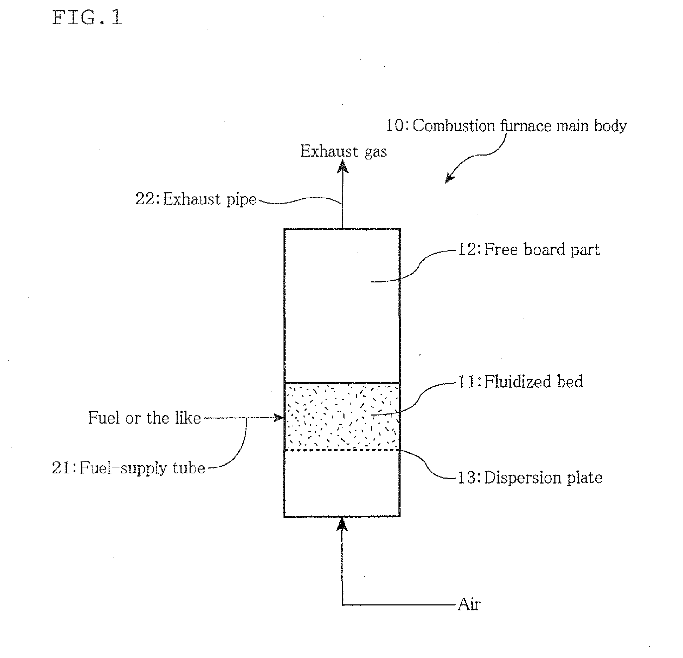

FIG. 1 is a schematic view showing one example of a fluidized bed combustion furnace.
In this fluidized bed combustion furnace, a fluidized bed 11 and a free board part 12 are provided within a combustion furnace main body 10. The fluidized bed 11 is composed of powder such as silica sand, limestone and coal ash, which serves as a fluidized bed material, and fluidized by an air flow supplied from the bottom of the fluidized bed main body 10. The powder forming the fluidized bed 11 is supported by a dispersion plate 13 which is in the form of a gauze or a porous plate.
The combustion furnace main body 10 is connected with a fuel-supply tube 21 supplying fuel to the fluidized bed 11. By this fuel-supply tube 21, solid fuel such as coke, petroleum coke, plastic fuel, biomass fuel, activated sludge and municipal garbage, liquid fuel such as heavy oil and crude oil are introduced into the furnace.
An exhaust pipe 22 is connected to the top of the combustion furnace main body 10. The exhaust pipe 22 discharges an exhaust gas, which is generated by combustion, outside the furnace.

The fluidized bed combustion furnace is driven while allowing air, which contributes to the combustion and fluidizing of the fluidized bed, to be flown from the bottom of the main body, whereby the temperature within the furnace is kept at around 700 to 900°C. Dinitrogen monoxide is generated with combustion. In the invention, the generated dinitrogen monoxide is decomposed by bringing it into contact with an FCC equilibrium catalyst.

In the invention, the FCC equilibrium catalyst is used as a fluidized bed material, for example. That is, the furnace is in advance filled with the FCC equilibrium catalyst as a fluidized bed material. As a result, dinitrogen monoxide contained in combustion gas can be brought into contact with the FCC equilibrium catalyst.
The particle size of the FCC equilibrium catalyst may be several tens microns, which is the particle size of an FCC equilibrium catalyst normally used. However, it is preferred that the particle size of the FCC equilibrium catalyst be adjusted to 10 to 500 µm, with 80 to 300 µm being more preferable.
The FCC equilibrium catalyst may be used in the form of a mixture with a normal fluidized bed material, such as silica sand, limestone and coal ash.

The FCC equilibrium catalyst may be mixed with the above-mentioned fuel and a desulfurizing agent such as limestone, and the resultant mixture may be put into the furnace from the fuel-supply tube 21. The FCC equilibrium catalyst which has been put to the furnace stays in the fluidized bed 11 or the free board part 12 and is brought into contact with the combustion gas. In this case, it is preferred that the particle size of the FCC equilibrium catalyst be around 80 to 300 µm. If the particle size of the FCC equilibrium catalyst is small, the FCC equilibrium catalyst stays (floats) mainly in the free board part 12. If the particle size of the FCC equilibrium catalyst is large, the FCC equilibrium catalyst stays mainly in the fluidized bed 11.

The FCC equilibrium catalyst may be introduced into the furnace from the side or the top of the combustion furnace main body 10 through an introduction tube (not shown) or the like. As in the case where a mixture of the fuel and the FCC equilibrium catalyst is introduced into the furnace, if the particle size of the FCC equilibrium catalyst is small, the FCC equilibrium catalyst stays (floats) mainly in the free board part 12. If the particle size of the FCC equilibrium catalyst is large, the FCC equilibrium catalyst stays mainly in the fluidized bed 11. As a result, the FCC equilibrium catalyst is brought into contact with the combustion gas.

Three methods for bringing the FCC equilibrium catalyst into contact with the gas are explained hereinabove. The invention is not limited thereto. Furthermore, dinitrogen monoxide can be decomposed by conducting two or three of these contact methods simultaneously.

The method for decomposing dinitrogen monoxide of the invention can be applied not only to the above-mentioned decomposition of dinitrogen monoxide within the combustion furnace but also to the decomposition of dinitrogen monoxide discharged outside the furnace as an exhaust gas. In this case, it is preferred that the exhaust gas be brought into contact with the FCC equilibrium catalyst with the temperature of the exhaust gas being in the range of 600 to 900°C. Outside this temperature range, decomposition efficiency of the dinitrogen monoxide by the catalyst may lower.

There are no particular restrictions on the method for bringing the exhaust gas to be in contact with the FCC equilibrium catalyst. For example, the exhaust gas may be allowed to pass through a catalyst bed composed of the FCC equilibrium catalyst which is provided in the exhaust pipe 22 shown in FIG. 1.
The exhaust pipe 22 may be provided with an introduction port from which the FCC equilibrium catalyst is introduced, and the introduced catalyst is then brought into contact with the exhaust gas.

The exhaust pipe 22 is connected to an exhaust gas treatment part in which a catalyst bed is formed or the catalyst is introduced, whereby the catalyst is brought into contact with the exhaust gas.
The above-mentioned method for decomposing dinitrogen monoxide in the exhaust gas can be applied not only to the exhaust gas in the fluidized bed combustion furnace but also to an exhaust gas generated from an industrial furnace in which combustion is conducted at 600 to 950°C, a heating furnace, an exhaust gas combustion boiler, production facilities of adipic acid which contains dinitrogen monoxide and automobiles.

In the invention, it is preferable to use activated alumina with the FCC equilibrium catalyst. Due to the combined use of the FCC equilibrium catalyst and activated alumina, lowering of decomposition performance caused by flying out of a combustion furnace of the FCC equilibrium catalyst of which the particle size is too small can be suppressed. Furthermore, by introducing activated alumina having a large particle size into a furnace, lowering in activity can be compensated.
Although normal industrial alumina can be used as the activated alumina, it is preferable to use alumina prepared by the oil immersion granulation method.

### EXAMPLES

### Example 1

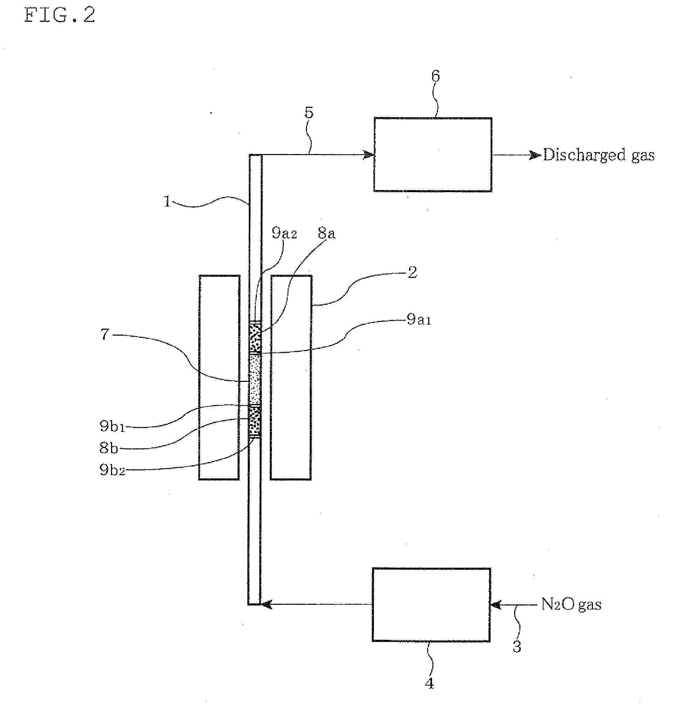

As the FCC equilibrium catalyst, an FCC equilibrium catalyst which has been withdrawn from a real FCC unit and is composed of 10 mass% of a rhenium-supported ultra-stable Y zeolite on which 520 mass ppm of vanadium and 280 mass ppm of nickel are accumulated, 40 mass% of alumina, 30 mass% of silica and 20 mass% of china clay (clay mineral) was used.
An experiment of decomposing N₂O was conducted by using this FCC equilibrium catalyst (particles with a size of 0.080 to 0.3 mm).
For this experiment, an apparatus shown in FIG. 2 was used. This apparatus had a quartz tube 1 having an inner diameter of 6 mm, an electric furnace 2 surrounding the central area in the longitudinal direction of the quartz tube 1, an N₂O gas introduction tube 3 connected to the bottom of the quartz tube 1, an N₂O gas flow meter 4 provided in the middle of the N₂O gas introduction tube 3, a gas discharge pipe 5 connected to the upper part of the quartz tube 1, and an N₂O analyzer 6 provided in the middle of the gas discharge pipe 5.
The quartz tube 1 was packed with the FCC equilibrium catalyst such that the packing length became 200 mm, thereby forming a catalyst bed 7. On the upper end of the catalyst bed 7, a three-layered packed body composed of a thin quartz wool layer 9a₁, a silica sand layer 8a with a packing length of 30 mm and a thin quartz wool layer 9a₂ was formed. On the lower end of the catalyst bed 7, similarly, a three-layered packed body composed of a thin quartz wool layer 9b₁, a silica sand layer 8b with a packing length of 30 mm and a thin quartz wool layer 9b₂ was formed. These two three-layered packed bodies held and fixed the catalyst bed 7.

An N₂O gas having an N₂O concentration of 500 ppm after dilution with nitrogen was supplied to the bottom of the quartz tube 1 from the N₂O gas introduction tube 3 through the N₂O gas flow meter 4 at a flow rate of 1 l/min (ordinary temperature and ordinary pressure). While changing the temperature of the catalyst bed 7 in the electric furnace 2, the N₂O gas was allowed to pass through the catalyst bed 7. Then, the gas which had been discharged to a gas discharge tube 5 from the top of the quartz tube 1 was introduced to the N₂O analyzer 6, where the N₂O concentration of the discharged gas was analyzed to measure an N₂O removal ratio.

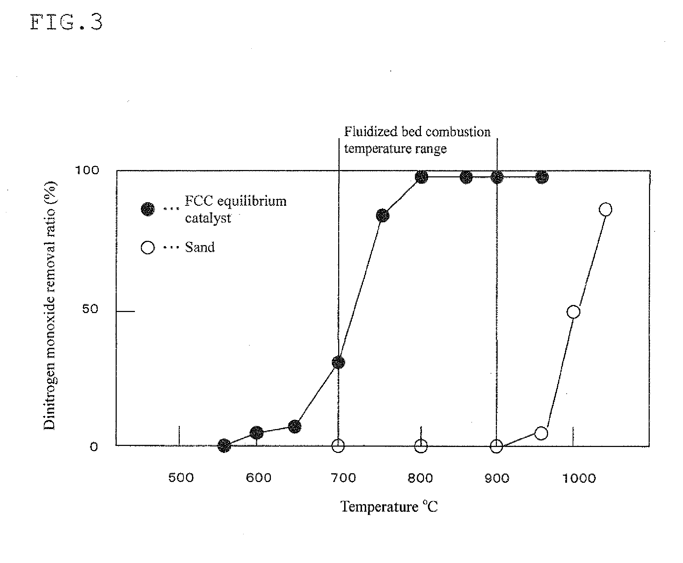

FIG. 3 is a graph showing the relationship between the temperature and the N₂O removal ratio.
From the graph shown in FIG. 3, it was confirmed that the FCC equilibrium catalyst showed a satisfactory N₂O decomposition activity at a temperature of 700 to 950°C. It was confirmed that the FCC equilibrium catalyst showed a satisfactorily high N₂O decomposition activity particularly under fluidized bed combustion temperature conditions (700 to 900°C). The products formed by decomposition were N₂ and O₂ gases, and generation of NO or NO₂ was not confirmed.

### Comparative Example 1

An experiment was conducted in the same manner as in Example 1, except that sand (No. 7 of JIS, particle size: 0.2 to 1.0 mm) was used instead of the FCC equilibrium catalyst. The results obtained are shown in FIG. 3. From this figure, the sand did not show N₂O decomposition activity under fluidized bed combustion temperature conditions (700 to 900°C) .

### INDUSTRIAL APPLICABILITY

The method for decomposing dinitrogen monoxide according to the invention can be preferably applied to a fluidized bed combustion system, a fluidized bed incineration system or the like for a solid such as coke and biomass, sludge, or the like.

## Claims

1. A method for decomposing dinitrogen monoxide comprising bringing a gas containing dinitrogen monoxide into contact with a fluid catalytic cracking (FCC) equilibrium catalyst.

2. The method for decomposing dinitrogen monoxide according to claim 1, wherein the FCC equilibrium catalyst is used as a fluidized bed material in a fluidized bed combustion furnace, and a combustion gas containing dinitrogen monoxide is brought into contact with the FCC equilibrium catalyst in the combustion furnace.

3. The method for decomposing dinitrogen monoxide according to claim 1, wherein the FCC equilibrium catalyst is introduced into a fluidized bed combustion furnace, and a combustion gas containing dinitrogen monoxide is brought into contact with the FCC equilibrium catalyst in the combustion furnace.

4. The method for decomposing dinitrogen monoxide according to claim 1, wherein a mixture of the FCC equilibrium catalyst and fuel is introduced into a fluidized bed combustion furnace, and a combustion gas containing dinifrogen monoxide is brought into contact with the FCC equilibrium catalyst in the combustion furnace.

5. The method for decomposing dinitrogen monoxide according to claim 1, wherein the FCC equilibrium catalyst is put in the exhaust gas discharged from a combustion furnace, and the exhaust gas is brought into contact with the FCC equilibrium catalyst.

6. The method for decomposing dinitrogen monoxide according to claim 1, wherein the exhaust gas discharged from a combustion furnace is allowed to pass through the catalyst bed which has been filled with the FCC equilibrium catalyst, whereby the exhaust gas is brought into contact with the FCC equilibrium catalyst.

7. The method for decomposing dinitrogen monoxide according to any one of claims 1 to 6, wherein activated alumina is used with the FCC equilibrium catalyst.
